# EUROPÄISCHE PATENTSCHRIFT

(11) **EP 0 782 784 B1**
(45) Veröffentlichungstag und Bekanntmachung des Hinweises auf die Patenterteilung: **25.02.1998**
(21) Anmeldenummer: 95932745.3
(22) Anmeldetag: 14.09.1995
(51) Int. Cl.: H02M 5/45, H02M 1/00

(54) **VERFAHREN ZUR REGELUNG EINES ALS NETZSTROMRICHTER FUNGIERENDEN VIERQUADRANTENSTELLERS**
PROCESS FOR REGULATING A FOUR-QUADRANT REGULATOR OPERATING AS A MAINS CONVERTER
PROCEDE DE REGULATION D'UN REGULATEUR A QUATRE QUADRANTS SERVANT DE CONVERTISSEUR DE COURANT DU SECTEUR

(30) Priorität: 21.09.1994 DE 4435351
(43) Veröffentlichungstag der Anmeldung: 09.07.1997
(73) Patentinhaber: ABB Daimler-Benz Transportation (Deutschland) GmbH, 16761 Hennigsdorf (DE)
(72) Erfinder: ENDRIKAT, Christian, D-13465 Berlin (DE); UNGER-WEBER, Frank, D-14109 Berlin (DE); STRÖNISCH, Volker, D-14089 Berlin (DE)
(74) Vertreter: Hamilton, Eberhard
(86) Internationale Anmeldenummer: EP9503614
(87) Internationale Veröffentlichungsnummer: WO9609685

(56) Entgegenhaltungen:
- DE-A- 4 037 531

## Beschreibung

Die Erfindung bezieht sich auf ein Verfahren zur Regelung eines als Netzstromrichter fungierenden Vierquadrantenstellers, wie es im Oberbegriff des Anspruches 1 näher definiert ist.

Verfahren dieser Art finden Anwendung z.B. bei Antriebssystemen elektrischer Drehstromlokomotiven. Fig.2 zeigt den grundsätzlichen Aufbau, wie er sich in verschiedenen Varianten allgemein etabliert hat.

Darin ist mit 1 ein Vierquadrantensteller bezeichnet, der mittels eines Mehrwicklungstransformators 2 und über einen Störfiltersatz 3 an ein Wechselspannungs-Fahrleitungsnetz 4 (Fahrdraht) mit z.B. 15 kV, 16 2/3 Hz angeschlossen ist. Der Vierquadrantensteller 1 fungiert als gepulster Netzstromrichter, der die transformierte Fahrleitungswechselspannung uN in eine geregelte Gleichspannung ud umformt und einen Gleichspannungszwischenkreis 5 speist. An diesen Gleichspannungszwischenkreis 5 sind Pulswechselrichter 6 angeschlossen, über die hier nicht näher dargestellte Asynchron-Fahrmotoren versorgt werden. Der Mehrwicklungstransformator 2 weist neben einer an der Fahrleitungsspannung uf liegenden Primärwicklung 7 und einer den Vierquadrantensteller 1 speisenden Sekundärwicklung 8 eine weitere Sekundärwicklung 9 für angeschlossene Hilfsbetriebeumrichter 10 auf. Mit 11 ist noch ein Stromabnehmer bezeichnet.

Es sei an dieser Stelle daraufhingewiesen, daß die dargestellte Anordnung nur ein vereinfachtes Schema ist. Die angeführten Elemente wie Vierquadrantensteller 1, Pulswechselrichter 6 und Hilfsbetriebeumrichter 10 können mehrfach eingesetzt sein.

Für den Einsatz von Vierquadrantenstellern als Netzstromrichter spricht die Möglichkeit der Rückspeisefähigkeit und daß sich damit ein Strom weitgehend beliebiger Phasenlage zur Fahrdrahtspannung einstellen läßt. Es ist bekannt, daß mittels des Vierquadrantenstellers der Strom z.B. in Phase zur Netzspannung (oder 180° dazu beim Rückspeisen) geregelt werden kann. Es wird in diesem Fall durch die Regelung dafür gesorgt werden, daß der Netzstromrichter der Lokomotive nur Wirkleistung aus dem Netz zieht bzw. nur Wirkleistung in das Netz einspeist (cos ϕ = 1 oder cos ϕ = - 1). Andererseits kann durch kapazitiven Strom eine Anhebung der Fahrdrahtspannung im Fahrbetrieb, durch einen induktiven Strom eine Absenkung im Netzbremsbetrieb erreicht werden, so daß u.U. höhere Wirkleistungen gefahren werden können. Mit Hilfe des Vierquadrantenstellers 1 kann somit gezielt neben dem zur Traktion erforderlichen Wirkstrom gezielt Blindstrom zur Verbesserung der Netzverhältnisse eingestellt werden (z.B. ETZ, Archiv Bd. 6 (1984), H. 1, S. 3 bis 8).

Der gesamte für die Traktion erforderliche Teil der Anordnung nach Fig. 2 wird in der Regel drehgestellweise zentral durch eine Antriebssteuerung gesteuert und geregelt. Die Steuerung der Hilfsbetriebeumrichter 10 erfolgt in der Regel unabhängig davon.

Mit dem Vierquadrantensteller 1 wird eine Stellerspannung ust erzeugt, die als Gegenspannung zur sekundärseitigen Transformatorspannung u_{N} wirksam ist und den eingezeichneten Strom iq bzw. ift bestimmt. Da die Stellerspannung ust keinen analogen sinusförmigen Verlauf hat, sondern durch Pulsbreitenmodulation aus der Zwischenkreisspannung ud erzeugt wird, tritt ein mehr oder weniger oberschwingungsbehafteter Stromverlauf auf. Mehrere Vierquadrantensteller 1 sind entweder über separate Sekundärwicklungen 8 des Transformators 2 oder direkt über separate Transformatoren angeschlossen. Sie werden in der Regel derart phasenversetzt moduliert, daß sich ein erheblicher Teil der durch die Pulsung verursachten Stromoberschwingungen auslöscht. Im folgenden kann ohne Beschränkung allgemein davon ausgegangen werden, daß die Summe der Ströme in den Vierquadrantenstellern - transformiert auf die Hochspannungsseite - in der Phasenlage in einem weiten Bereich eingestellt werden kann.

Nun beziehen sich die Anforderungen bezüglich der Phasenlage des Stromes auf den Netzstrom if, also den Strom, der sich aus dem vom Vierquadrantensteller eingestellten Traktionsstrom, dem Strom der Hilfsbetriebeumrichter 10 und dem Strom durch das Störstromfilter 3 ergibt. Einige Ausführungen von Hilfsbetriebeumrichtern erzeugen auf der Netzseite einen erheblichen Blindstrom, so daß insbesondere bei Teillast der Traktionsstromrichter eine u.U. deutliche Abweichung der Phasenlage des Netzstromes if gegenüber der von den Vierquadrantenstellern eingestellten Phasenlage des Stromes resultiert. Das Störstromfilter 3 bewirkt einen weiteren Blindstrom. Wird nun z.B. im Bereich der DB ein cos ϕ = 1 bzw. cos ϕ = -1 angestrebt, so ist dies, abhängig von der Leistung der Hilfsbetriebe, nicht genau sichergestellt. Ein bei anderen Bahnverwaltungen u.U. aus Gründen der Netzbeeinflussung vom Vierquadrantensteller gesteuert eingestellter Blindstrom (vgl. z.B. genannte Literaturstelle ETZ) wird aufgrund des Einflusses der Hilfsbetriebeausrüstung verfälscht und deshalb ebenfalls nicht genau im Netz fließen.

Prinzipiell ist, wie oben skizziert, der Vierquadrantensteller in der Lage, auch den von der Hilfsbetriebeausrüstung erzeugten Blindstrom zu kompensieren. Da dies jedoch in Abhängigkeit von der momentanen Leistung der Hilfsbetriebeumrichter erfolgen müßte, ist der Steuerungsaufwand (Erfassung von Meßwerten, Kommunikation zwischen den Steuerungen von Vierquadrantenstellern und Hilfsbetriebeumrichtern) unverhältnismäßig groß.

Aufgabe der Erfindung ist es, hier Abhilfe zu schaffen und ein Verfahren zu erstellen, mit dem auf einfache Weise - ohne wesentlichen Aufwand - die aufgezeigten Probleme gelöst werden können.

Die genannte Aufgabe wird gemäß der Erfindung entsprechend den kennzeichnenden Merkmalen des Anspruches 1 gelöst. Vorteilhafte Ausgestaltungen sind den Unteransprüchen entnehmbar.

Grundgedanke der Erfindung ist es, den vom Vierquadrantensteller einzustellenden Blindstrom zu regeln (im Gegensatz zur Steuerung in der ETZ-Veröffentlichung) und dann diese Regelung - im Gegensatz zu den bekannten bisherigen Steuerverfahren - auch noch direkt auf das Fahrleitungswechselspannungsnetz 4 zu beziehen.

Bislang wurde nur bekannt, bei der Definition der Phasenlage des Stromes, den Vierquadrantensteller 1 allein zu betrachten, die Tatsache, daß auch der Störstromfiltersatz 3 und die Hilfsbetriebeumrichter 10 - insbesondere im Teillastbereich - den cos ϕ der gesamten Lokomotive erheblich beeinflussen, blieb unberücksichtigt.

Anhand der Zeichnung wird in schematischer Darstellung die Erfindung näher erläutert.

Es zeigen:
- Fig. 1: die neue Regelkreisstruktur
- Fig. 2: eine bekannte Anordnung für ein Antriebssystem (schon beschrieben)

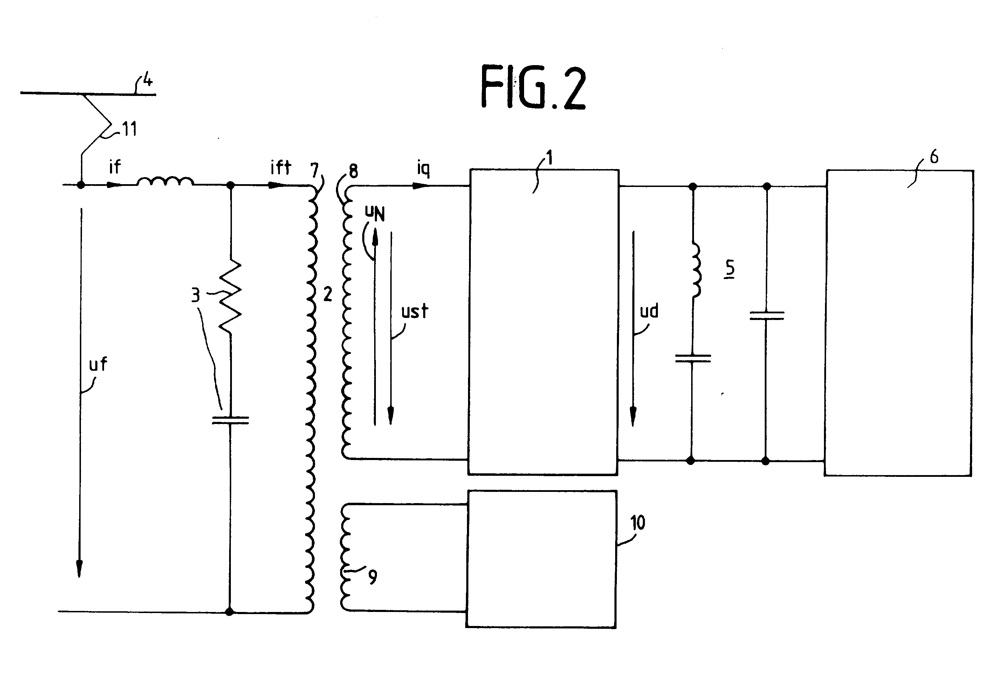

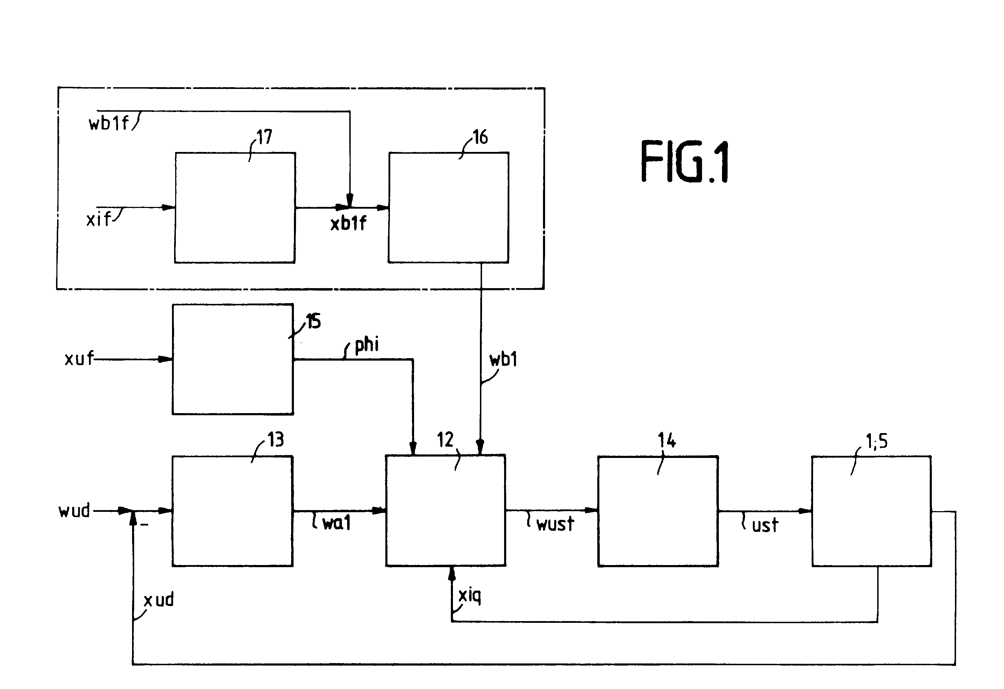

Fig. 1 zeigt die neue Regelkreisstruktur. Man erkennt zunächst allgemein übliche Funktionsblöcke der Stromregelung des Vierquadrantentstellers 1 mit Zwischenkreis 5. In dieser Stromregelung wird ein Stromregler 12 (z.B. P-Regler) von einem Zwischenkreis-spannungsregler 13 (z.B. PI-Regler) über dessen Ausgangsgröße wai (Wirkstromsollwert) geführt und bewirkt über einen Pulsmodulator 14 (zur Pulsmustererzeugung) eine Veränderung der vom Vierquadrantensteller 1 wirksamen Stellerspannung ust. Die Stromregelung stellt hierbei sicher, daß ein geforderter Strom gleich welcher Phasenlage zur Fahrdrahtspannung auch wirklich im Vierquadrantensteller fließt. Ausgangsgröße des Stromreglers 12 ist die vom Vierquadrantensteller 1 an der Transformator-Sekundärwicklung 8 zu realisierende Spannung wust.

Der übergeordnete Zwischenkreis-Spannungsregler 13 sorgt über den Stromregler 12 für eine Regelung der Gleichspannung des Zwischenkreises, deren Istwert xud ständig mit einem Sollwert wud verglichen und die Differenz dem Spanungsregler 13 zugeführt wird. Diese übergeordnete Regelung sorgt für eine konstante Zwischenkreisspannung ud und liefert als Ergebnis ein Maß für den Wirkanteil wai des Stromes (d.h. den in Phase zur Netzspannung liegenden Anteil).

Eine Netzsynchronisationsstufe 15 liefert zudem aus Meßwerten xuf der Fahrdrahtspannung uf Schätzwerte für die jeweils aktuellen Phasenwinkel ϕ mit Wirkung auf den Stromregler 12, der die Pulsmodulatorstufe 14 für auszugebende Pulsmuster ansteuert. In der Pulsmodulatorstufe 14 wird die vom Stromregler 12 geforderte Spannung wust an den Transformator-Sekundärklemmen mittels eines geeigneten Verfahrens (z.B. mittels der bekannten Pulsweitenmodulation) durch eine pulsförmige Spannung ust aproximiert. Dieser grundsätzlichen Regelkreisstruktur ist jetzt nach der Erfindung die strichpunktiert hervorgehobene Anordnung zugeordnet, bestehend aus einem Blindstromregler 16 (z.B. einem PI-Regler) und einer vorgeschalteten Analysierstufe 17 (z.B. mittels einer diskreten Fourier-Transformation).

Nach der Erfindung wird in der Analysierstufe 17 aus Meßwerten xif des Fahrdrahtstromes if (zweckmäßig direkt am Stromabnehmer 11) mittels einfacher digitaler Verfahren periodisch dessen Blindanteil xbif ermittelt. Dieser Anteil wird im Blindstromregler 16 mit dem Sollwert wbif (gesteuerte Vorgabe für den Blindanteil) verglichen (z.B. mit 0 oder jedem weitgehend beliebigen aus Gründen der Netzstützung vorgegebenen Wert) und so geregelt, daß stationär dieser Sollwert eingehalten wird. Die Blindstromregelung liefert ein Maß für den vom Vierquadrantensteller 1 einzustellenden Blindstrom wbi an den Stromregler 12, der diesen dann realisiert.

Durch Messung des Stromes direkt am Stromabnehmer 11, kann der Einfluß von Störstromfiltersatz 3 und den Hilfsbetriebeumrichtern 10 auf den Grundschwingungs-Blindstrom der Lokomotive miterfaßt werden.

Unabhängig vom Betriebszustand, auch der Hilfsbetriebeumrichter 10, wird der Blindstrom zumindest stationär vom Vierquadrantensteller 1 ausgeregelt, so daß sich in der Summe immer die gewünschte Phasenlage der Fahrdrahtstrom-Grundschwingung einstellt.

Die Blindstromregelung nach der Erfindung stellt praktisch keinen zusätzlichen Aufwand bei der Realisierung der Vierquadrantensteller-Regelung dar. Der Meßwert des Fahrdrahtstromes if wird ohnehin aus Gründen der Überwachung ermittelt. Will man diesen nicht explizit der Vierquadrantensteller-Regelung zur Verfügung stellen, so kann man statt dessen auch den Meßwert ift des Transformator-Primärstromes verwenden. Dieser ist dem Algorithmus der Vierquadrantensteller-Regelung im allgemeinen bekannt, da er für eine aktive Störstromkompensation (z.B. Dämpfung von 100 Hz-Anteilen im Strom) verwendet wird. Dieser Ansatz hat allerdings den Nachteil, nur die Einflüsse der Hilfsbetriebeumrichter 10 auf den Blindstrom am Fahrdraht und nicht auch den des Störfiltersatzes 3 ausregeln zu können.

## Patentansprüche

1. Verfahren zur Regelung eines als Netzstromrichter fungierenden Vierquadrantenstellers (1) einer fahrleitungsgespeisten Drehstromlokomotive, der einerseits über einen Gleichspannungs-Zwischenkreis (5) und Pulswechselrichter (6) Drehstromantriebe speist und andererseits über einen Mehrwicklungs-Transformator (2), dessen Sekundärwicklungen (8, 9) für den Vierquadrantensteller (1) und Hilfsbetriebeumrichter (10) vorgesehen sind, sowie einen Störfiltersatz (3) an ein Wechselspannungsnetz (4) angeschlossen ist,
**dadurch gekennzeichnet,**
daß zusätzlich zu einer den Vierquadrantensteller (1) beaufschlagenden Wirkstromregelung eine Konstantstromregelung des von der gesamten Anordnung aus Vierquadrantensteller (1), Hilfsbetriebeumrichter (10) und Störfiltersatz (3) gespeisten Blindstromes erfolgt, wobei über eine Messung des Fahrleistungsstromes direkt am Stromabnehmer (11) die Blindstromanteile im Störfiltersatz (3) und solche der Hilfsbetriebeumrichter (10) miterfaßt werden und daß deren Einfluß auf den Grundschwingungs-Blindstrom über den Vierquadrantensteller (1) so ausgeregelt wird, daß sich in der Summe die gewünschte Phasenlage der Fahrdraht-Grundschwingung einstellt.

2. Verfahren nach Anspruch 1,
**dadurch gekennzeichnet,**
daß der Regelung auf konstante Phasenlage zwischen den Grundschwingungen von Fahrdrahtstrom und -spannung eine gesteuerte Vorgabe von Blindstrom-Sollwerten (wbif) überlagert wird.

3. Verfahren nach Anspruch 1 oder 2,
**dadurch gekennzeichnet,**
daß dem von einem Zwischenkreis-Spannungsregler (13) geführten Stromregler (12) innerhalb einer herkömmlichen Regelkreisstruktur für die Stellerspannung (ust) am Vierquadranten-Steller (1), bestehend aus netzsynchronisiertem (15) Stromregler (12), Pulsmodulator (14) und Vierquadranten-Steller (1), ein Blindstronregler (16) beigeschaltet wird, der den Stromregler mit einem additiven Blindstromanteil (wbi) steuert, wie er sich aus dem Vergleich von gemessenem bzw. ermittelten Blindstromanteil (xbif) des Fahrdrahtstromes (if) in einer Analyseanordnung (17) und einem vorgegebenen Blindstromsollwert (wbif) ergibt.

## Claims

1. Method for the regulation of a four-quadrant regulator (1), which functions as mains current frequency changer, of a polyphase alternating current locomotive fed from an overhead conductor, which regulator on the one hand feeds polyphase alternating current drives by way of an intermediate direct voltage circuit (5) and a pulse DC/AC converter (6) and on the other hand is connected to an alternating voltage mains (4) by way of an interference filter set (3) as well as a multiwinding transformer (2), the secondary windings (8, 9) of which are provided for the four-quadrant regulator (1) and an auxiliary operation DC/AC converter (10), characterised thereby, that in addition to the active current regulation acting on the four-quadrant regulator (1), a constant current regulation of the reactive current fed from the entire arrangement of the four-quadrant regulator (1), the auxiliary operation DC/AC converter (10) and the interference filter set (3) takes place, wherein the reactive current components in the interference filter set (3) and such of the auxiliary operation DC/AC converter (10) are detected at the same time by way of a measurement of the driving power current directly at the current pick-up (11) and their influence on the fundamental frequency reactive current is so regulated out by way of the four-quadrant regulator (1) that in total the desired phase position of the overhead conductor fundamental frequency is set.

2. Method according to claim 1, characterised thereby, that a controlled presetting of reactive current target values (wbif) is superimposed on the regulation towards a constant phase position between the fundamental oscillations of overhead conductor current and voltage.

3. Method according to claim 1 or 2, characterised thereby, that the current regulator (12), which is controlled by an intermediate circuit voltage regulator (13), has - within a conventional regulating loop structure which is for the regulator voltage (ust) at the four-quadrant regulator (1) and consists of a mains-synchronised (15) current regulator (12), a pulse modulator (14) and the four-quadrant regulator (1) - a reactive current regulator (16) connected thereto, which controls the current regulator by an additive reactive current component (wbi) such as results from the comparison of the measured or ascertained reactive current component (xbif) of the overhead conductor current (if) in an analysis arrangement (17) and a preset reactive current target value (wbif).

## Revendications

1. Procédé de régulation d'un transducteur opérant sur les quatre quadrants (1), jouant le rôle de convertisseur du courant du réseau, d'une locomotive à courant triphasé alimentée par caténaire, qui d'une part alimente, par l'intermédiaire d'un circuit intermédiaire à tension redressée (5) et d'onduleurs pulsatoires (6), des mécanismes d'entraînement sur courant triphasé et d'autre part est relié à un réseau à tension alternative (4) par l'intermédiaire d'un transformateur à plusieurs bobinages (2) dont des bobinages secondaires (8, 9) sont prévus pour le transducteur opérant sur les quatre quadrants (1) et pour des convertisseurs auxiliaires (10), ainsi que par l'intermédiaire d'un filtre antiparasites (3),
caractérisé
par le fait qu'en plus d'une régulation du courant actif s'exerçant sur le transducteur opérant sur les quatre quadrants (1) se fait une régulation, à courant constant, du courant réactif fourni par l'ensemble du dispositif constitué du transducteur opérant sur les quatre quadrants (1), des convertisseurs auxiliaires (10) et du filtre antiparasites (3), les parties réactives du courant dans le filtre antiparasites (3) et celles du redresseur auxiliaire (10) étant directement saisies sur le pantographe (11) par une mesure du courant du fil de caténaire, et par le fait que leur influence sur le courant réactif d'oscillation fondamentale est régulée par l'intermédiaire du transducteur opérant sur les quatre quadrants (1) de façon que dans la somme apparaisse la position de phase désirée de l'oscillation fondamentale du courant du fil de caténaire.

2. Procédé selon la revendication 1,
caractérisé
par le fait qu'à la régulation donnant une position de phase constante entre les oscillations fondamentales de l'intensité et de la tension du courant du fil de caténaire se superpose une prescription commandée des valeurs prescrites du courant réactif (wbif).

3. Procédé selon la revendication 1 ou 2,
caractérisé
par le fait qu'à côté du régulateur de courant (12) guidé par un régulateur de tension du circuit intermédiaire (13), à l'intérieur d'une structure de circuit de régulation traditionnelle pour la tension (ust) apparaissant au transducteur opérant sur les quatre quadrants (1), constitué d'un régulateur de courant (12) synchronisé avec le réseau (15), d'un modulateur d'impulsion (14) et d'un transducteur opérant sur les quatre quadrants (1), est monté un régulateur du courant réactif (6) qui commande le régulateur de courant avec une portion additive de courant réactif (wbi) telle qu'elle apparaît à partir de la comparaison de la partie de courant réactif mesurée ou déterminée (xbif) du courant (if) du fil de caténaire dans un dispositif d'analyse (17) et d'une valeur prescrite (wbif) du courant réactif.
